# EUROPEAN PATENT APPLICATION

(11) **EP 3 057 372 A1**
(43) Date of publication of application: **17.08.2016**
(21) Application number: 13896560.3
(22) Date of filing: 31.10.2013
(51) Int. Cl.: H04W 76/00

(54) **METHOD, DEVICE AND SYSTEM FOR PROCESSING RADIO LINK FAILURE REPORT**

(71) Applicant: Huawei Technologies Co., Ltd., Longgang District Shenzhen, Guangdong 518129 (CN)
(72) Inventor: LI, Bingzhao, Shenzhen Guangdong 518129 (CN); CHEN, Yanyan, Shenzhen Guangdong 518129 (CN); YANG, Xiaodong, Shenzhen Guangdong 518129 (CN); ZHI, Yuliang, Shenzhen Guangdong 518129 (CN)
(74) Representative: Thun, Clemens
(86) International application number: PCT/CN2013/086353
(87) International publication number: WO 2015/062042

(57) **Abstract**

The present invention discloses a method for processing a radio link failure report, an apparatus, and a system. When a radio link failure occurs in user equipment in a current cell, if security information is activated, the user equipment initiates a radio resource control RRC connection re-establishment process; if a re-establishment cell is selected before a re-establishment timing times out, the user equipment sends an RRC connection re-establishment request to a network device, and records an identifier of the re-establishment cell in a radio link failure report; the user equipment sends the radio link failure report to the network device, so that the network device determines, according to the radio link failure report, a reason why a radio link failure occurs in the user equipment. In this way, a problem in the prior art that why a radio link failure occurs cannot be accurately diagnosed can be resolved, and efficiency of performing network self-optimization for a solution can be improved.

## Description

### TECHNICAL FIELD

Embodiments of the present invention relate to the field of communications technologies, and in particular, to a method for processing a radio link failure report, an apparatus, and a system.

### BACKGROUND

When a radio link failure occurs in user equipment in a network, the user equipment records information about occurrence of a radio link failure (a radio link failure report for short), and reports the recorded radio link failure report to a network device, so that the network device diagnoses, according to the radio link failure report reported by the user equipment, why the radio link failure occurs in the user equipment, and may further perform network self-optimization for a solution according to a reason why the radio link failure occurs.

However, in the prior art, the radio link failure report recorded by the user equipment is relatively simple, and an application scenario with a complex network and mobility of the user equipment are not considered, which therefore results in that the network device cannot accurately diagnose, according to the radio link failure report recorded by the user equipment, why the radio link failure occurs, and further affects the network self-optimization for a solution.

### SUMMARY

The present invention provides a method for processing a radio link failure report, an apparatus, and a system, which can resolve a problem in the prior art that why a radio link failure occurs cannot be accurately diagnosed, and improve efficiency of performing network self-optimization for a solution.

According to a first aspect, the present invention provides a method for processing a radio link failure report, including:
determining, by user equipment, that a radio link failure occurs in a current cell; and
sending, by the user equipment, a radio link failure report to a network side device, where the radio link failure report is used by the network device to determine, according to the radio link failure report, a reason why a radio link failure occurs in the user equipment, where
the radio link failure report includes at least one of the following:
   information about whether security information of the user equipment is activated;
   related information of the user equipment when the user equipment re-establishes a radio resource control RRC connection; and
   information about a serving cell that corresponds to a secondary network device used when a radio link failure occurs in the user equipment.

Based on the first aspect, in a first possible implementation manner, if the radio link failure report includes the information about whether the security information of the user equipment is activated, before the sending, by the user equipment, a radio link failure report to a network side device, the method further includes:
if the user equipment determines that the security information is inactive, switching, by the user equipment, to an idle state, and recording, in the radio link failure report, information that the security information is inactive.

Based on the first aspect, in a second possible implementation manner, if the radio link failure report includes the related information of the user equipment when the user equipment re-establishes a radio resource control RRC connection, before the sending, by the user equipment, a radio link failure report to a network side device, the method further includes:
if the user equipment determines that the security information of the user equipment is already activated, initiating, by the user equipment, a radio resource control RRC connection re-establishment process; and
if a re-establishment cell is selected before a re-establishment timing times out, sending, by the user equipment, an RRC connection re-establishment request to the network device, and recording an identifier of the re-establishment cell in the radio link failure report; or
if a re-establishment cell cannot be selected before a re-establishment timing times out, switching, by the user equipment, to an idle state, and recording, in the radio link failure report, a reason why a re-establishment request is not sent, where the reason includes that the re-establishment cell cannot be selected or the re-establishment timing times out.

Based on the first aspect, in a third possible implementation manner, if the radio link failure report includes the related information of the user equipment when the user equipment re-establishes a radio resource control RRC connection, before the sending, by the user equipment, a radio link failure report to a network side device, the method further includes:
sending, by the user equipment, an RRC connection re-establishment request to the network device, and recording an identifier of the re-establishment cell in the radio link failure report; and
if the re-establishment fails, recording, by the user equipment, a re-establishment failure reason in the radio link failure report, where the re-establishment failure reason includes that a preamble is not acknowledged or an RRC connection re-establishment response message is not received.

Based on the second or third possible implementation manner of the first aspect, in a fourth possible implementation manner, the related information of the user equipment further includes at least one of the following: location information of the user equipment when a radio link failure occurs, location information of the user equipment when RRC connection re-establishment fails, an interval between a time when a radio link failure occurs and a time when RRC connection re-establishment is initiated, a signal level measurement result of the current cell, in which a radio link failure occurs, when RRC connection re-establishment occurs, a signal level measurement result of the re-establishment cell, in which a radio link failure occurs, when RRC connection re-establishment occurs, and a signal level measurement result of a neighboring cell when RRC connection re-establishment occurs.

Based on the first aspect, in a fifth possible implementation manner, if the radio link failure report includes the information about the serving cell that corresponds to the secondary network device used when a radio link failure occurs in the user equipment, before the sending, by the user equipment, a radio link failure report to a network side device, the method further includes:
if at least two network side devices are configured to serve the user equipment together, where one network side device is a primary network device, and another network side device is a secondary network device, recording, by the user equipment in the radio link failure report, the information about the serving cell that corresponds to the configured secondary network device, where the information about the serving cell that corresponds to the secondary network device includes an identifier of the serving cell that corresponds to the secondary network device and/or a signal level measurement result of the serving cell that corresponds to the secondary network device.

Based on the first aspect, in a sixth possible implementation manner, before the sending, by the user equipment, a radio link failure report to a network device, the method includes:
determining, by the user equipment, that the security information is already activated.

According to a second aspect, a method for processing a radio link failure report is provided, including:
receiving, by a network device, a radio link failure report sent by user equipment; and
determining, by the network device according to the radio link failure report, a reason why a radio link failure occurs in the user equipment, where
the radio link failure report includes at least one of the following:
   information about whether security information of the user equipment is activated;
   related information of the user equipment when the user equipment re-establishes a radio resource control RRC connection; and
   information about a serving cell that corresponds to a secondary network device used when a radio link failure occurs in the user equipment.

Based on the second aspect, in a first possible implementation manner, the radio link failure report includes information that the security information of the user equipment is inactive, and the information that the security information is inactive is information that is recorded when a radio link failure occurs in the user equipment and the security information is inactive; and
after the receiving, by a network device, a radio link failure report sent by user equipment, the method includes:
discarding, by the network device, the radio link failure report according to the information that the security information is inactive and that is included in the radio link failure report.

Based on the second aspect, in a second possible implementation manner, the radio link failure report includes information that the security information of the user equipment is already activated and a reason why a re-establishment request is not sent; and
the reason is a reason why a re-establishment request is not sent and that is recorded when a re-establishment cell cannot be selected before a re-establishment timing times out, when RRC connection re-establishment is initiated, after the security information of the user equipment is already activated, and when a radio link failure occurs in the user equipment in a current cell, where
the reason includes that the re-establishment cell cannot be selected or the re-establishment timing times out; and
the determining, by the network device according to the radio link failure report, a reason why a radio link failure occurs in the user equipment includes:
determining, according to the reason why the re-establishment request is not sent and that is included in the radio link failure report, that the reason why a radio link failure occurs in the user equipment is that a coverage hole exists at a location at which a radio link failure occurs in the user equipment.

Based on the second aspect, in a third possible implementation manner, if the radio link failure report includes information that the security information is already activated, an identifier of a re-establishment cell, and a re-establishment failure reason, where
the identifier of the re-establishment cell is an identifier of the re-establishment cell that is selected before a re-establishment timing times out, when a radio resource control RRC connection re-establishment process is initiated, after the security information of the user equipment is already activated, and when a radio link failure occurs in the user equipment in a current cell;
the re-establishment failure reason is a reason why the re-establishment fails after the re-establishment cell is selected before the re-establishment timing times out, when a radio resource control RRC connection re-establishment process is initiated, after the security information of the user equipment is already activated, and when a radio link failure occurs in the user equipment in a current cell; and
the re-establishment failure reason includes that a preamble is not acknowledged or an RRC connection re-establishment response message is not received; and
the determining, by the network device according to the radio link failure report, a reason why a radio link failure occurs in the user equipment includes:
if the re-establishment failure reason is that the preamble is not acknowledged, determining, according to the identifier of the re-establishment cell and the re-establishment failure reason that are included in the radio link failure report, that the reason why a radio link failure occurs in the user equipment is that an uplink coverage problem exists at a location at which a radio link failure occurs in the user equipment; or
if the re-establishment failure reason is that the RRC connection re-establishment response message is not received, determining that the reason why a radio link failure occurs in the user equipment is that a downlink coverage problem exists at a location at which a radio link failure occurs in the user equipment.

Based on the second aspect, in a fourth possible implementation manner, if the radio link failure report includes the related information of the user equipment recorded when the user equipment re-establishes an RRC connection, where
the related information of the user equipment includes at least one of the following: location information of the user equipment when a radio link failure occurs, location information of the user equipment when RRC connection re-establishment fails, an interval between a time when a radio link failure occurs and a time when RRC connection re-establishment is initiated, a signal level measurement result of a current cell, in which a radio link failure occurs, when RRC connection re-establishment occurs, a signal level measurement result of a re-establishment cell, in which a radio link failure occurs, when RRC connection re-establishment occurs, and a signal level measurement result of a neighboring cell when RRC connection re-establishment occurs,
the determining, by the network device according to the radio link failure report, a reason why a radio link failure occurs in the user equipment is specifically:
   if it is determined that an interpolation between the location information of the user equipment when a radio link failure occurs and the location information of the user equipment when RRC connection re-establishment fails is greater than a preset threshold, determining that the reason why a radio link failure occurs in the user equipment is that a location movement occurs when the user equipment re-establishes an RRC connection.

Based on the fourth possible implementation manner of the second aspect, in a fifth possible implementation manner, after the determining, by the network device according to the radio link failure report, a reason why a radio link failure occurs in the user equipment, the method includes:
determining a moving speed of the user equipment according to the location information of the user equipment when a radio link failure occurs, the location information of the user equipment when RRC connection re-establishment fails, and the interval between the time when a radio link failure occurs and the time when RRC connection re-establishment is initiated; and
adjusting, according to the moving speed of the user equipment, a moving parameter that corresponds to a type of the user equipment.

Based on the second aspect, in a sixth possible implementation manner, if in addition to an identifier of a re-establishment cell, the radio link failure report further includes the information about the serving cell that corresponds to the secondary network device,
after the receiving, by a network device, a radio link failure report sent by user equipment, the method includes:
if it is determined that the identifier of the re-establishment cell is the same as an identifier of a cell included in the information about the serving cell that corresponds to the secondary network device, skipping using the re-establishment cell as a target cell for switching and adjustment.

According to a third aspect, user equipment is provided, including:
a processor, configured to determine that a radio link failure occurs in a current cell; and
a transmitter, configured to send a radio link failure report to a network side device, where the radio link failure report is used by the network device to determine, according to the radio link failure report, a reason why a radio link failure occurs in the user equipment, where
the radio link failure report includes at least one of the following:
   information about whether security information of the user equipment is activated;
   related information of the user equipment when the user equipment re-establishes a radio resource control RRC connection; and
   information about a serving cell that corresponds to a secondary network device used when a radio link failure occurs in the user equipment.

Based on the third aspect, in a first possible implementation manner, if the radio link failure report includes the information about whether the security information of the user equipment is activated, the processor is further configured to: when it is determined that the security information is inactive, switch to an idle state, and record, in the radio link failure report, information that the security information is inactive.

Based on the third aspect, in a second possible implementation manner, if the radio link failure report includes the related information of the user equipment when the user equipment re-establishes a radio resource control RRC connection, the processor is further configured to: when it is determined that the security information of the user equipment is already activated, initiate a radio resource control RRC connection re-establishment process; and
if a re-establishment cell is selected before a re-establishment timing times out, send an RRC connection re-establishment request to the network device, and record an identifier of the re-establishment cell in the radio link failure report; or
if a re-establishment cell cannot be selected before a re-establishment timing times out, switch to an idle state, and record, in the radio link failure report, a reason why a re-establishment request is not sent, where the reason includes that the re-establishment cell cannot be selected or the re-establishment timing times out.

Based on the third aspect, in a third possible implementation manner, if the radio link failure report includes the related information of the user equipment when the user equipment re-establishes a radio resource control RRC connection, the processor is further configured to: when sending an RRC connection re-establishment request to the network device, record an identifier of a re-establishment cell in the radio link failure report; and
if the re-establishment fails, record a re-establishment failure reason in the radio link failure report, where the re-establishment failure reason includes that a preamble is not acknowledged or an RRC connection re-establishment response message is not received.

Based on the second or third possible implementation manner of the third aspect, in a fourth possible implementation manner, the related information of the user equipment further includes at least one of the following: location information of the user equipment when a radio link failure occurs, location information of the user equipment when RRC connection re-establishment fails, an interval between a time when a radio link failure occurs and a time when RRC connection re-establishment is initiated, a signal level measurement result of the current cell, in which a radio link failure occurs, when RRC connection re-establishment occurs, a signal level measurement result of the re-establishment cell, in which a radio link failure occurs, when RRC connection re-establishment occurs, and a signal level measurement result of a neighboring cell when RRC connection re-establishment occurs.

Based on the third aspect, in a fifth possible implementation manner, if the radio link failure report includes the information about the serving cell that corresponds to the secondary network device used when a radio link failure occurs in the user equipment, and if at least two network side devices are configured to serve the user equipment together, where one network side device is a primary network device, and another network side device is a secondary network device, the processor is further configured to record, in the radio link failure report, the information about the serving cell that corresponds to the configured secondary network device, where the information about the serving cell that corresponds to the secondary network device includes an identifier of the serving cell that corresponds to the secondary network device and/or a signal level measurement result of the serving cell that corresponds to the secondary network device.

Based on the third aspect, in a sixth possible implementation manner, the processor is further configured to: before sending the radio link failure report to the network device, determine that the security information is already activated.

According to a fourth aspect, a network device is provided, including:
a receiver, configured to receive a radio link failure report sent by user equipment; and
a processor, configured to determine, according to the radio link failure report, a reason why a radio link failure occurs in the user equipment, where
the radio link failure report includes at least one of the following:
   information about whether security information of the user equipment is activated;
   related information of the user equipment when the user equipment re-establishes a radio resource control RRC connection; and
   information about a serving cell that corresponds to a secondary network device used when a radio link failure occurs in the user equipment.

Based on the fourth aspect, in a first possible implementation manner, the radio link failure report includes information that the security information of the user equipment is inactive, and the information that the security information is inactive is information that is recorded when a radio link failure occurs in the user equipment and the security information is inactive; and
the processor is further configured to discard the radio link failure report according to the information that the security information is inactive and that is included in the radio link failure report.

Based on the fourth aspect, in a second possible implementation manner, the radio link failure report includes information that the security information of the user equipment is already activated and a reason why a re-establishment request is not sent; and
the reason is a reason why a re-establishment request is not sent and that is recorded when a re-establishment cell cannot be selected before a re-establishment timing times out, when RRC connection re-establishment is initiated, after the security information of the user equipment is already activated, and when a radio link failure occurs in the user equipment in a current cell, where
the reason includes that the re-establishment cell cannot be selected or the re-establishment timing times out; and
the processor is further configured to determine, according to the reason why the re-establishment request is not sent and that is included in the radio link failure report, that the reason why a radio link failure occurs in the user equipment is that a coverage hole exists at a location at which a radio link failure occurs in the user equipment.

Based on the fourth aspect, in a third possible implementation manner, if the radio link failure report includes information that the security information is already activated, an identifier of a re-establishment cell, and a re-establishment failure reason, where
the identifier of the re-establishment cell is an identifier of the re-establishment cell that is selected before a re-establishment timing times out, when a radio resource control RRC connection re-establishment process is initiated, after the security information of the user equipment is already activated, and when a radio link failure occurs in the user equipment in a current cell;
the re-establishment failure reason is a reason why the re-establishment fails after the re-establishment cell is selected before the re-establishment timing times out, when a radio resource control RRC connection re-establishment process is initiated, after the security information of the user equipment is already activated, and when a radio link failure occurs in the user equipment in a current cell; and
the re-establishment failure reason includes that a preamble is not acknowledged or an RRC connection re-establishment response message is not received; and
the processor is further configured to: if the re-establishment failure reason is that the preamble is not acknowledged, determine, according to the identifier of the re-establishment cell and the re-establishment failure reason that are included in the radio link failure report, that the reason why a radio link failure occurs in the user equipment is that an uplink coverage problem exists at a location at which a radio link failure occurs in the user equipment; or
if the re-establishment failure reason is that the RRC connection re-establishment response message is not received, determine that the reason why a radio link failure occurs in the user equipment is that a downlink coverage problem exists at a location at which a radio link failure occurs in the user equipment.

Based on the fourth aspect, in a fourth possible implementation manner, if the radio link failure report includes the related information of the user equipment recorded when the user equipment re-establishes an RRC connection, where
the related information of the user equipment includes at least one of the following: location information of the user equipment when a radio link failure occurs, location information of the user equipment when RRC connection re-establishment fails, an interval between a time when a radio link failure occurs and a time when RRC connection re-establishment is initiated, a signal level measurement result of the current cell, in which a radio link failure occurs, when RRC connection re-establishment occurs, a signal level measurement result of the re-establishment cell, in which a radio link failure occurs, when RRC connection re-establishment occurs, and a signal level measurement result of a neighboring cell when RRC connection re-establishment occurs,
the processor is further configured to: if it is determined that an interpolation between the location information of the user equipment when a radio link failure occurs and the location information of the user equipment when RRC connection re-establishment fails is greater than a preset threshold, determine that the reason why a radio link failure occurs in the user equipment is that a location movement occurs when the user equipment re-establishes an RRC connection.

Based on the fourth possible implementation manner of the fourth aspect, in a fifth possible implementation manner, the processor is further configured to determine a moving speed of the user equipment according to the location information of the user equipment when a radio link failure occurs, the location information of the user equipment when RRC connection re-establishment fails, and the interval between the time when a radio link failure occurs and the time when RRC connection re-establishment is initiated; and
adjust, according to the moving speed of the user equipment, a moving parameter that corresponds to a type of the user equipment.

Based on the fourth aspect, in a sixth possible implementation manner, if in addition to an identifier of a re-establishment cell, the radio link failure report further includes the information about the serving cell that corresponds to the secondary network device,
the processor is further configured to: if it is determined that the identifier of the re-establishment cell is the same as an identifier of a cell included in the information about the serving cell that corresponds to the secondary network device, skip using the re-establishment cell as a target cell for switching and adjustment.

According to a fifth aspect, a system for processing a radio link failure report is provided, including: the user equipment according to the third aspect and the network device according to the fifth aspect.

In the embodiments of the present invention, user equipment determines that a radio link failure occurs in a current cell, and the user equipment sends a radio link failure report to a network device, where the radio link failure report includes at least one of the following: information about whether security information of the user equipment is activated, related information of the user equipment when the user equipment re-establishes a radio resource control RRC connection, and information about a serving cell that corresponds to a secondary network device used when a radio link failure occurs in the user equipment. Therefore, the network device can accurately diagnose, according to specific content of the radio link failure report, why a radio link failure occurs.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a schematic flowchart of a method for processing a radio link failure report according to an embodiment of the present invention;
FIG. 2 is a schematic structural diagram of user equipment according to another embodiment of the present invention; and
FIG. 3 is a schematic structural diagram of a network device according to another embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

In the prior art, a radio link failure report recorded by user equipment is relatively simple, and an application scenario with a complex network and mobility of the user equipment are not considered. For example, a network device needs to determine, according to an identifier of a re-establishment cell or a measurement result of a neighboring cell, that a reason why a radio link failure occurs is excessively late switching or a coverage hole. However, if the radio link failure report reported by the user equipment does not carry the identifier of the re-establishment cell or the measurement result of the neighboring cell, the network device cannot determine that a reason why a radio link failure occurs is excessively late switching or a coverage hole.

For another example, after the user equipment sends a radio link failure in a coverage hole area of a cell 1(a current cell), the user equipment performs a re-establishment process, and starts a T311 timing; before the T311 timing times out, the user equipment is near a cell 2 (another cell), determines that the cell 2 is an appropriate cell, and initiates re-establishment to the cell 2; in this re-establishment process, an identifier of a re-establishment cell in the radio link failure report that is sent by the user equipment to the network device is the cell 2, the network device performs an analysis according to the radio link failure report, and may diagnose that the reason why a radio link failure occurs is excessively late switching to the cell 2; however, in fact, a radio link failure occurs because the user equipment has a coverage hole in the cell 1. The network device performs wrong determining because the user equipment moves after a radio link failure occurs.

Therefore, the prior art has a problem that the network device cannot accurately diagnose, according to the radio link failure report recorded by the user equipment, why a radio link failure occurs, and further, efficiency of performing network self-optimization for a solution is affected.

The network device in the embodiments of the present invention includes, for example, a base station controller (Base Station Controller, BSC), a radio network controller (Radio Network Controller, RNC), an evolved NodeB (eNode b), or a NodeB (Node B).

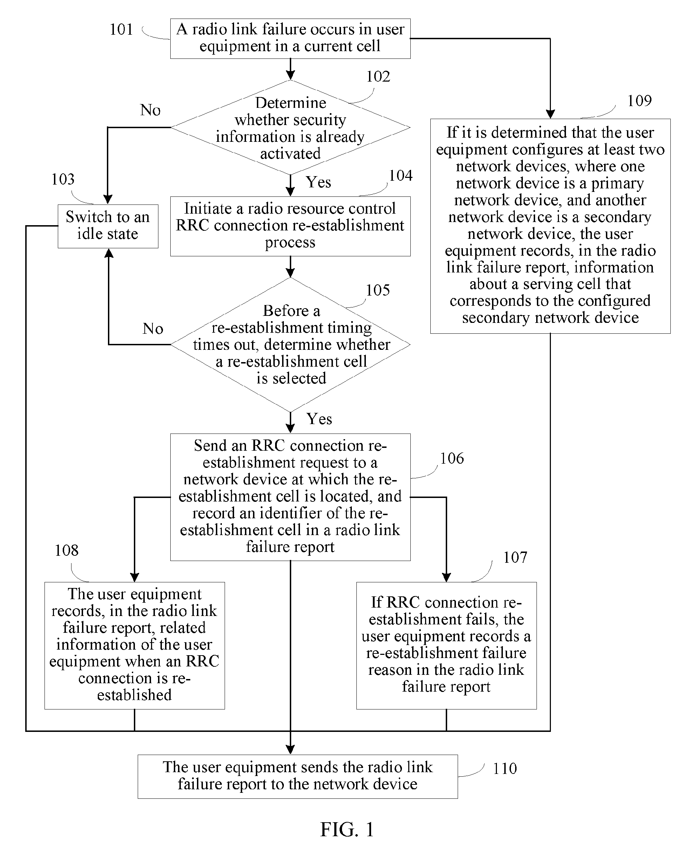

FIG. 1 is a schematic flowchart of a method for processing a radio link failure report according to an embodiment of the present invention. As shown in FIG. 1, the method for processing a radio link failure report in this embodiment may include:
101: A radio link failure occurs in user equipment in a current cell.
102: Determine whether security information is already activated; and if the security information is inactive, perform step 103; or if the security information is already activated, perform step 104.

That the security information is already activated indicates that the user equipment already interacts with a network device (for example, a base station) at which the current cell is located and the security information of the user equipment is activated.

103: Switch to an idle state.

After switching to an idle state, the user equipment records, in the radio link failure report, information that the security information is inactive, or does not report the radio link failure report. Optionally, if the user equipment switches to an idle state because the security information is inactive, when the user equipment does not have a signal level measurement result of a neighboring cell, the information that the security information is inactive is recorded in the radio link failure report or the radio link failure report is not reported.

Optionally, if the user equipment switches to an idle state because a re-establishment cell is not selected in step 105, a reason why a re-establishment request is not sent is recorded in the radio link failure report, where the reason why the re-establishment request is not sent includes, for example, that the re-establishment cell cannot be selected or a re-establishment timing times out.

104: Initiate a radio resource control (Radio Resource Control, RRC) connection re-establishment process.

105: Before a re-establishment timing times out, determine whether a re-establishment cell is selected; and if yes, perform step 106; otherwise, perform step 103.

Specifically, if the re-establishment cell cannot be selected before the re-establishment timing times out, the re-establishment request is not sent, and step 103 is performed; or
if the re-establishment cell is successfully selected before the re-establishment timing times out, step 106 is performed.

106: Send an RRC connection re-establishment request to a network device at which the re-establishment cell is located, and record an identifier of the re-establishment cell in a radio link failure report.

Optionally, after step 106, the method includes:
107: If RRC connection re-establishment fails, the user equipment records a re-establishment failure reason in the radio link failure report.

Specifically, when the user equipment sends the RRC connection re-establishment request to the network device (for example, a base station) at which the re-establishment cell is located, a process of sending a preamble is first triggered:
if the sending the preamble is not successfully acknowledged, and the sending the RRC connection re-establishment request is canceled, a re-establishment failure is caused; or
if the preamble is successfully acknowledged, and the RRC connection re-establishment request is sent to the network device (for example, a base station) at which the re-establishment cell is located, but an RRC connection re-establishment response message is not received, a re-establishment failure is also caused.

The user equipment records the re-establishment failure reason in the radio link failure report, where the re-establishment failure reason includes, for example, that the preamble is not acknowledged or the RRC connection re-establishment response message is not received.

Optionally, after step 106, the method further includes:
108: The user equipment records, in the radio link failure report, related information of the user equipment when an RRC connection is re-established.

The related information of the user equipment includes, for example, one of location information of the user equipment when a radio link failure occurs, location information of the user equipment when RRC connection re-establishment fails, an interval between a time when a radio link failure occurs and a time when RRC connection re-establishment is initiated, a signal level measurement result of a serving cell (that is, the current cell when a radio link failure occurs in the user equipment), in which a radio link failure occurs, when RRC connection re-establishment occurs, a signal level measurement result of a target cell (the selected re-establishment cell), in which a radio link failure occurs, when RRC connection re-establishment occurs, and a signal level measurement result of a neighboring cell when RRC connection re-establishment occurs, or a combination thereof.

Optionally, after step 101, the method further includes:

109: If it is determined that the user equipment configures at least two network devices, where one network device is a primary network device, and another network device is a secondary network device, the user equipment records, in the radio link failure report, information about a serving cell that corresponds to the configured secondary network device.

The information about the serving cell that corresponds to the secondary network device includes, for example, an identifier of the serving cell that corresponds to the secondary network device or a signal level measurement result of the serving cell that corresponds to the secondary network device.

Optionally, after step 103 and steps 106 to 109, the method includes:
110: The user equipment sends the radio link failure report to the network device.

Correspondingly, after the network device receives the radio link failure report sent by the user equipment, the network device determines, according to the radio link failure report, a reason why a radio link failure occurs in the user equipment, which is specifically:
for example, if the radio link failure report is a radio link failure report sent to the network device when a radio link failure occurs in the user equipment and the security information is inactive, the radio link failure report includes the information that the security information is inactive; and
correspondingly, the network device discards the radio link failure report according to the information that the security information is inactive and that is included in the radio link failure report.

For another example, if the radio link failure report is a radio link failure report sent to the network device when the re-establishment cell cannot be selected before the re-establishment timing times out, when RRC connection re-establishment is initiated and the security information is activated, and when a radio link failure occurs in the user equipment in a current cell, the radio link failure report includes a record of the reason why the re-establishment request is not sent; and
correspondingly, the network device determines, according to the radio link failure report, the reason why a radio link failure occurs in the user equipment, which is specifically: determining, according to the reason why the re-establishment request is not sent and that is included in the radio link failure report, that the reason why a radio link failure occurs in the user equipment is that a coverage hole exists at a location at which a radio link failure occurs in the user equipment.

For another example, if the radio link failure report is a radio link failure report sent to the network device after the user equipment selects the re-establishment cell, and sends the RRC connection re-establishment request to the network device before the re-establishment timing times out, the radio link failure report includes an identifier of the re-establishment cell and the re-establishment failure reason, where the re-establishment failure reason includes that the preamble is not acknowledged or the RRC connection re-establishment response message is not received; and
correspondingly, the network device determines, according to the radio link failure report, the reason why a radio link failure occurs in the user equipment, which is specifically: if the re-establishment failure reason is that the preamble is not acknowledged, determining, according to the identifier of the re-establishment cell and the re-establishment failure reason that are included in the radio link failure report, the reason why a radio link failure occurs in the user equipment is that an uplink coverage problem exists at a location at which a radio link failure occurs in the user equipment; or if the re-establishment failure reason is that the RRC connection re-establishment response message is not received, determining that the reason why a radio link failure occurs in the user equipment is that a downlink coverage problem exists at a location at which a radio link failure occurs in the user equipment.

For another example, if the radio link failure report is a radio link failure report sent to the network device after the user equipment selects the re-establishment cell, and sends the RRC connection re-establishment request to the network device before the re-establishment timing times out, the radio link failure report further includes the location information of the user equipment when a radio link failure occurs, the location information of the user equipment when RRC connection re-establishment fails, and the interval between the time when a radio link failure occurs and the time when RRC connection re-establishment is initiated; and
correspondingly, the network device determines, according to the radio link failure report, the reason why a radio link failure occurs in the user equipment, which is specifically:
if it is determined that an interpolation between the location information of the user equipment when a radio link failure occurs and the location information of the user equipment when RRC connection re-establishment fails is greater than a preset threshold, determining that the reason why a radio link failure occurs in the user equipment is that a location movement occurs when the user equipment re-establishes an RRC connection.

Further, after the network device determines, according to the radio link failure report, the reason why a radio link failure occurs in the user equipment, the method includes:
determining a moving speed of the user equipment according to the location information of the user equipment when a radio link failure occurs, the location information of the user equipment when RRC connection re-establishment fails, and the interval between the time when a radio link failure occurs and the time when RRC connection re-establishment is initiated; and
adjusting, according to the moving speed of the user equipment, a moving parameter that corresponds to a type of the user equipment.

For another example, if the radio link failure report is a radio link failure report sent to the network device after the user equipment selects the re-establishment cell, and sends the RRC connection re-establishment request to the network device before the re-establishment timing times out, and
it is also assumed that the user equipment configures at least two network devices to serve the UE together, where one network device is a primary network device, and another network device is a secondary network device,
in addition to an identifier of the re-establishment cell, the radio link failure report further includes the information about the serving cell that corresponds to the secondary network device; and
correspondingly, after the receiving, by a network device, a radio link failure report sent by user equipment, the method includes:
if it is determined that the identifier of the re-establishment cell is the same as an identifier of a cell included in the information about the serving cell that corresponds to the secondary network device, skipping using the re-establishment cell as a target cell for switching and adjustment.

In this embodiment of the present invention, whether security information is activated when a radio link failure occurs in user equipment, or whether RRC connection re-establishment fails when the re-establishment is initiated after security information is activated, and a re-establishment failure reason is recorded when the re-establishment fails, where the re-establishment failure reason includes that a sending location of the user equipment moves, or a re-establishment cell cannot be selected, or a preamble is not acknowledged, or RRC connection re-establishment is not received, or the like, so that when receiving a radio link failure report of the user equipment, a network device accurately diagnoses, according to information recorded in the radio link failure report, why a radio link failure occurs; and
further, network self-optimization for a solution may be performed according to a reason why a radio link failure occurs, for example, a moving speed of the user equipment is determined according to location information of the user equipment when a radio link failure occurs, location information of the user equipment when RRC connection re-establishment fails, and an interval between a time when a radio link failure occurs and a time when RRC connection re-establishment is initiated; a moving parameter corresponding to a type of the user equipment is adjusted according to the moving speed of the user equipment; for another example, if the network device determines that an identifier of the re-establishment cell is the same as an identifier of a cell included in information about a serving cell that corresponds to a secondary network device, the re-establishment cell is not used as a target cell for switching and adjustment.

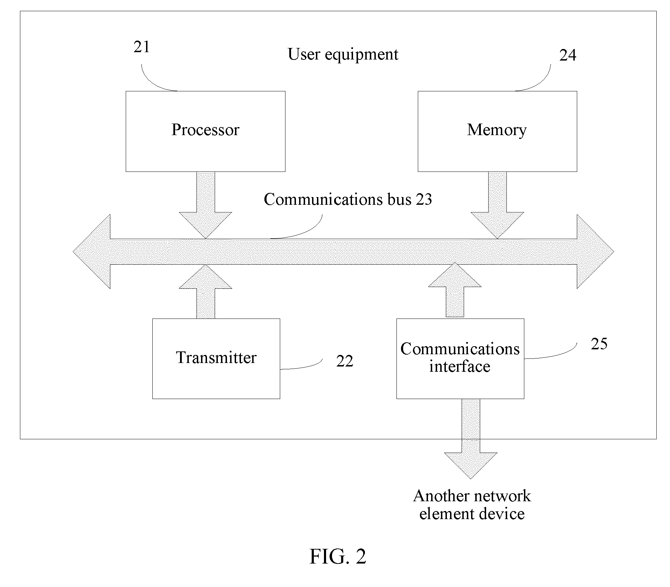

FIG. 2 is a schematic structural diagram of user equipment according to another embodiment of the present invention. As shown in FIG. 2, the user equipment includes: a processor 21 and a transmitter 22, where the processor 21 is connected to the transmitter 22 by using a communications bus 23. Further, the user equipment further includes a memory 24, and instructions for implementing the foregoing method for processing a radio link failure report are stored in the memory 24. Further, the user equipment further includes, for example, a communications interface 25, and the transmitter 22 is in communication connection with another network element device (for example, a base station) by using the communications interface 25.

For example, that the processor 21 invokes the instructions in the memory 24 includes:
the processor 21 is configured to determine that a radio link failure occurs in a current cell; and
the transmitter 22 is configured to send a radio link failure report to a network side device, where the radio link failure report is used by the network device to determine, according to the radio link failure report, a reason why a radio link failure occurs in the user equipment, where
the radio link failure report includes at least one of the following:
   information about whether security information of the user equipment is activated;
   related information of the user equipment when the user equipment re-establishes a radio resource control RRC connection; and
   information about a serving cell that corresponds to a secondary network device used when a radio link failure occurs in the user equipment.

For example, if the radio link failure report includes the information about whether the security information of the user equipment is activated, the processor 21 is further configured to: when it is determined that the security information is inactive, switch to an idle state, and record, in the radio link failure report, information that the security information is inactive.

For example, if the radio link failure report includes the related information of the user equipment when the user equipment re-establishes a radio resource control RRC connection, the processor 21 is further configured to: when it is determined that the security information of the user equipment is already activated, initiate a radio resource control RRC connection re-establishment process; and
if a re-establishment cell is selected before a re-establishment timing times out, send an RRC connection re-establishment request to the network device, and record an identifier of the re-establishment cell in the radio link failure report; or
if a re-establishment cell cannot be selected before a re-establishment timing times out, switch to an idle state, and record, in the radio link failure report, a reason why a re-establishment request is not sent, where the reason includes that the re-establishment cell cannot be selected or the re-establishment timing times out.

For example, if the radio link failure report included the related information of the user equipment when the user equipment re-establishes a radio resource control RRC connection, the processor 21 is further configured to: when sending an RRC connection re-establishment request to the network device, record an identifier of a re-establishment cell in the radio link failure report; and
if the re-establishment fails, record a re-establishment failure reason in the radio link failure report, where the re-establishment failure reason includes that a preamble is not acknowledged or an RRC connection re-establishment response message is not received.

For example, the related information of the user equipment further includes at least one of the following: location information of the user equipment when a radio link failure occurs, location information of the user equipment when RRC connection re-establishment fails, an interval between a time when a radio link failure occurs and a time when RRC connection re-establishment is initiated, a signal level measurement result of the current cell, in which a radio link failure occurs, when RRC connection re-establishment occurs, a signal level measurement result of the re-establishment cell, in which a radio link failure occurs, when RRC connection re-establishment occurs, and a signal level measurement result of a neighboring cell when RRC connection re-establishment occurs.

For example, if the radio link failure report includes the information about the serving cell that corresponds to the secondary network device used when a radio link failure occurs in the user equipment, and if at least two network side devices are configured to serve the user equipment together, where one network side device is a primary network device, and another network side device is a secondary network device, the processor 21 is further configured to record, in the radio link failure report, the information about the serving cell that corresponds to the configured secondary network device, where the information about the serving cell that corresponds to the secondary network device includes an identifier of the serving cell that corresponds to the secondary network device and/or a signal level measurement result of the serving cell that corresponds to the secondary network device.

For example, the processor 21 is further configured to: before sending the radio link failure report to the network device, determine that the security information is already activated.

In this embodiment of the present invention, whether security information is activated when a radio link failure occurs in user equipment, or whether RRC connection re-establishment fails when the re-establishment is initiated after security information is activated, and a re-establishment failure reason is recorded when the re-establishment fails, where the re-establishment failure reason includes that a sending location of the user equipment moves, or a re-establishment cell cannot be selected, or a preamble is not acknowledged, or RRC connection re-establishment is not received, or the like, so that when receiving a radio link failure report of the user equipment, a network device accurately diagnoses, according to information recorded in the radio link failure report, why a radio link failure occurs; and
further, network self-optimization for a solution may be performed according to a reason why a radio link failure occurs, for example, a moving speed of the user equipment is determined according to location information of the user equipment when a radio link failure occurs, location information of the user equipment when RRC connection re-establishment fails, and an interval between a time when a radio link failure occurs and a time when RRC connection re-establishment is initiated; a moving parameter corresponding to a type of the user equipment is adjusted according to the moving speed of the user equipment; for another example, if the network device determines that an identifier of the re-establishment cell is the same as an identifier of a cell included in information about a serving cell that corresponds to a secondary network device, the re-establishment cell is not used as a target cell for switching and adjustment.

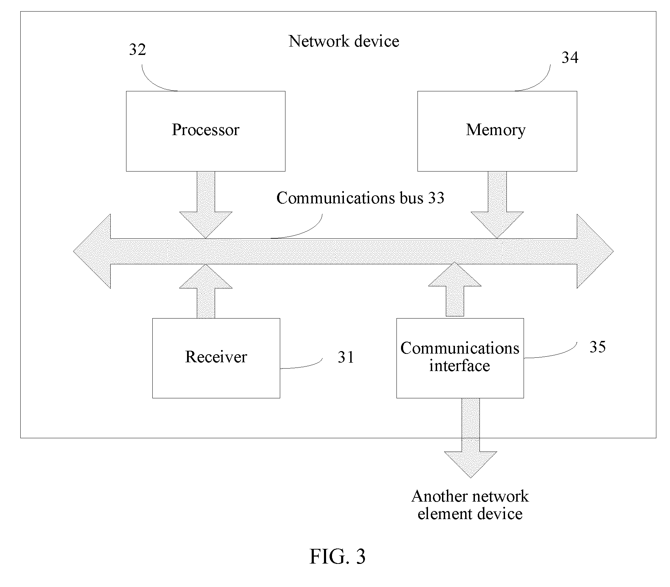

FIG. 3 is a schematic structural diagram of a network device according to another embodiment of the present invention. As shown in FIG. 3, the network device includes: a receiver 31 and a processor 32, where the receiver 31 is connected to the processor 32 by using a communications bus 33. Further, the network device further includes a memory 34, and instructions for implementing the foregoing method for processing a radio link failure report are stored in the memory 34. Further, the network device further includes, for example, a communications interface 35, and is in communication connection with another network element device (for example, user equipment) by using the communications interface 35.

For example, the receiver 31 is configured to receive a radio link failure report sent by user equipment; and
the processor 32 is configured to determine, according to the radio link failure report, a reason why a radio link failure occurs in the user equipment, where
the radio link failure report includes at least one of the following:
information about whether security information of the user equipment is activated;
related information of the user equipment when the user equipment re-establishes a radio resource control RRC connection; and
information about a serving cell that corresponds to a secondary network device used when a radio link failure occurs in the user equipment.

For example, the radio link failure report includes information that the security information of the user equipment is inactive, and the information that the security information is inactive is information that is recorded when a radio link failure occurs in the user equipment and the security information is inactive; and
the processor 32 is further configured to discard the radio link failure report according to the information that the security information is inactive and that is included in the radio link failure report.

For example, the radio link failure report includes information that the security information of the user equipment is already activated and a reason why a re-establishment request is not sent;
the reason is a reason why a re-establishment request is not sent and that is recorded when a re-establishment cell cannot be selected before a re-establishment timing times out, when RRC connection re-establishment is initiated, after the security information of the user equipment is already activated, and when a radio link failure occurs in the user equipment in a current cell, where
the reason includes that the re-establishment cell cannot be selected or the re-establishment timing times out; and
the processor 32 is further configured to determine, according to the reason why the re-establishment request is not sent and that is included in the radio link failure report, that the reason why a radio link failure occurs in the user equipment is that a coverage hole exists at a location at which a radio link failure occurs in the user equipment.

For example, if the radio link failure report includes the information that the security information is already activated, an identifier of a re-establishment cell, and a re-establishment failure reason, where
the identifier of the re-establishment cell is an identifier of the re-establishment cell that is selected before a re-establishment timing times out, when a radio resource control RRC connection re-establishment process is initiated, after the security information of the user equipment is already activated, and when a radio link failure occurs in the user equipment in a current cell;
the re-establishment failure reason is a reason why the re-establishment fails after the re-establishment cell is selected before the re-establishment timing times out, when a radio resource control RRC connection re-establishment process is initiated, after the security information of the user equipment is already activated, and when a radio link failure occurs in the user equipment in a current cell; and
the re-establishment failure reason includes that a preamble is not acknowledged or an RRC connection re-establishment response message is not received; and
the processor 32 is further configured to: if the re-establishment failure reason is that the preamble is not acknowledged, determine, according to the identifier of the re-establishment cell and the re-establishment failure reason that are included in the radio link failure report, that the reason why a radio link failure occurs in the user equipment is that an uplink coverage problem exists at a location at which a radio link failure occurs in the user equipment; or
if the re-establishment failure reason is that the RRC connection re-establishment response message is not received, determine that the reason why a radio link failure occurs in the user equipment is that a downlink coverage problem exists at a location at which a radio link failure occurs in the user equipment.

For example, if the radio link failure report includes the related information of the user equipment recorded when the user equipment re-establishes an RRC connection, where
the related information of the user equipment includes at least one of the following: location information of the user equipment when a radio link failure occurs, location information of the user equipment when RRC connection re-establishment fails, an interval between a time when a radio link failure occurs and a time when RRC connection re-establishment is initiated, a signal level measurement result of the current cell, in which a radio link failure occurs, when RRC connection re-establishment occurs, a signal level measurement result of the re-establishment cell, in which a radio link failure occurs, when RRC connection re-establishment occurs, and a signal level measurement result of a neighboring cell when RRC connection re-establishment occurs,
the processor 32 is further configured to: if it is determined that an interpolation between the location information of the user equipment when a radio link failure occurs and the location information of the user equipment when RRC connection re-establishment fails is greater than a preset threshold, determine that the reason why a radio link failure occurs in the user equipment is that a location movement occurs when the user equipment re-establishes an RRC connection.

For example, the processor 32 is further configured to determine a moving speed of the user equipment according to the location information of the user equipment when a radio link failure occurs, the location information of the user equipment when RRC connection re-establishment fails, and the interval between the time when a radio link failure occurs and the time when RRC connection re-establishment is initiated; and
adjust, according to the moving speed of the user equipment, a moving parameter that corresponds to a type of the user equipment.

For example, if in addition to an identifier of a re-establishment cell, the radio link failure report further includes the information about the serving cell that corresponds to the secondary network device,
the processor 32 is further configured to: if it is determined that the identifier of the re-establishment cell is the same as an identifier of a cell included in the information about the serving cell that corresponds to the secondary network device, skip using the re-establishment cell as a target cell for switching and adjustment.

In this embodiment of the present invention, whether security information is activated when a radio link failure occurs in user equipment, or whether RRC connection re-establishment fails when the re-establishment is initiated after security information is activated, and a re-establishment failure reason is recorded when the re-establishment fails, where the re-establishment failure reason includes that a sending location of the user equipment moves, or a re-establishment cell cannot be selected, or a preamble is not acknowledged, or RRC connection re-establishment is not received, or the like, so that when receiving a radio link failure report of the user equipment, a network device accurately diagnoses, according to information recorded in the radio link failure report, why a radio link failure occurs; and
further, network self-optimization for a solution may be performed according to a reason why a radio link failure occurs, for example, a moving speed of the user equipment is determined according to location information of the user equipment when a radio link failure occurs, location information of the user equipment when RRC connection re-establishment fails, and an interval between a time when a radio link failure occurs and a time when RRC connection re-establishment is initiated; a moving parameter corresponding to a type of the user equipment is adjusted according to the moving speed of the user equipment; for another example, if the network device determines that an identifier of the re-establishment cell is the same as an identifier of a cell included in information about a serving cell that corresponds to a secondary network device, the re-establishment cell is not used as a target cell for switching and adjustment.

An embodiment of the present invention further provides a system for processing a radio link failure report, where the system specifically includes the user equipment provided in the embodiment shown in FIG. 2 and the network device provided in the embodiment shown in FIG. 3. For specific content, reference may be made to related descriptions in the embodiments shown in FIG. 2 and FIG. 3, and details are not described again.

It may be clearly understood by persons skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of hardware in addition to a software functional unit.

When the foregoing integrated unit is implemented in a form of a software functional unit, the integrated unit may be stored in a computer-readable storage medium. The software functional unit is stored in a storage medium and includes several instructions for instructing a computer device (which may be a personal computer, a server, or a network device) to perform some of the steps of the methods described in the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of the present invention.

## Claims

1. A method for processing a radio link failure report, comprising:
determining, by user equipment, that a radio link failure occurs in a current cell; and
sending, by the user equipment, a radio link failure report to a network side device, wherein the radio link failure report is used by the network device to determine, according to the radio link failure report, a reason why a radio link failure occurs in the user equipment, wherein
the radio link failure report comprises at least one of the following:
information about whether security information of the user equipment is activated;
related information of the user equipment when the user equipment re-establishes a radio resource control RRC connection; and
information about a serving cell that corresponds to a secondary network device used when a radio link failure occurs in the user equipment.

2. The method according to claim 1, if the radio link failure report comprises the information about whether the security information of the user equipment is activated, before the sending, by the user equipment, a radio link failure report to a network side device, further comprising:
if the user equipment determines that the security information is inactive, switching, by the user equipment, to an idle state, and recording, in the radio link failure report, information that the security information is inactive.

3. The method according to claim 1, if the radio link failure report comprises the related information of the user equipment when the user equipment re-establishes a radio resource control RRC connection, before the sending, by the user equipment, a radio link failure report to a network side device, further comprising:
if the user equipment determines that the security information of the user equipment is already activated, initiating, by the user equipment, a radio resource control RRC connection re-establishment process; and
if a re-establishment cell is selected before a re-establishment timing times out, sending, by the user equipment, an RRC connection re-establishment request to the network device, and recording an identifier of the re-establishment cell in the radio link failure report; or
if a re-establishment cell cannot be selected before a re-establishment timing times out, switching, by the user equipment, to an idle state, and recording, in the radio link failure report, a reason why a re-establishment request is not sent, wherein the reason comprises that the re-establishment cell cannot be selected or the re-establishment timing times out.

4. The method according to claim 1, if the radio link failure report comprises the related information of the user equipment when the user equipment re-establishes a radio resource control RRC connection, before the sending, by the user equipment, a radio link failure report to a network side device, further comprising:
sending, by the user equipment, an RRC connection re-establishment request to the network device, and recording an identifier of the re-establishment cell in the radio link failure report; and
if the re-establishment fails, recording, by the user equipment, a re-establishment failure reason in the radio link failure report, wherein the re-establishment failure reason comprises that a preamble is not acknowledged or an RRC connection re-establishment response message is not received.

5. The method according to at least one of claim 3 or 4, wherein
the related information of the user equipment further comprises at least one of the following:
location information of the user equipment when a radio link failure occurs, location information of the user equipment when RRC connection re-establishment fails, an interval between a time when a radio link failure occurs and a time when RRC connection re-establishment is initiated, a signal level measurement result of the current cell, in which a radio link failure occurs, when RRC connection re-establishment occurs, a signal level measurement result of the re-establishment cell, in which a radio link failure occurs, when RRC connection re-establishment occurs, and a signal level measurement result of a neighboring cell when RRC connection re-establishment occurs.

6. The method according to claim 1, if the radio link failure report comprises the information about the serving cell that corresponds to the secondary network device used when a radio link failure occurs in the user equipment, before the sending, by the user equipment, a radio link failure report to a network side device, further comprising:
if at least two network side devices are configured to serve the user equipment together, wherein one network side device is a primary network device, and another network side device is a secondary network device, recording, by the user equipment in the radio link failure report, the information about the serving cell that corresponds to the configured secondary network device, wherein the information about the serving cell that corresponds to the secondary network device comprises an identifier of the serving cell that corresponds to the secondary network device and/or a signal level measurement result of the serving cell that corresponds to the secondary network device.

7. The method according to any one of claims 1 to 6, before the sending, by the user equipment, a radio link failure report to a network device, comprising:
determining, by the user equipment, that the security information is already activated.

8. A method for processing a radio link failure report, comprising:
receiving, by a network device, a radio link failure report sent by user equipment; and
determining, by the network device according to the radio link failure report, a reason why a radio link failure occurs in the user equipment, wherein
the radio link failure report comprises at least one of the following:
information about whether security information of the user equipment is activated;
related information of the user equipment when the user equipment re-establishes a radio resource control RRC connection; and
information about a serving cell that corresponds to a secondary network device used when a radio link failure occurs in the user equipment.

9. The method according to claim 8, wherein the radio link failure report comprises information that the security information of the user equipment is inactive, and the information that the security information is inactive is information that is recorded when a radio link failure occurs in the user equipment and the security information is inactive; and
after the receiving, by a network device, a radio link failure report sent by user equipment, the method comprises:
discarding, by the network device, the radio link failure report according to the information that the security information is inactive and that is comprised in the radio link failure report.

10. The method according to claim 8, wherein the radio link failure report comprises information that the security information of the user equipment is already activated and a reason why a re-establishment request is not sent;
the reason is a reason why a re-establishment request is not sent and that is recorded when a re-establishment cell cannot be selected before a re-establishment timing times out, when RRC connection re-establishment is initiated, after the security information of the user equipment is already activated, and when a radio link failure occurs in the user equipment in a current cell, wherein
the reason comprises that the re-establishment cell cannot be selected or the re-establishment timing times out; and
the determining, by the network device according to the radio link failure report, a reason why a radio link failure occurs in the user equipment comprises:
determining, according to the reason why the re-establishment request is not sent and that is comprised in the radio link failure report, that the reason why a radio link failure occurs in the user equipment is that a coverage hole exists at a location at which a radio link failure occurs in the user equipment.

11. The method according to claim 8, wherein if the radio link failure report comprises information that the security information is already activated, an identifier of a re-establishment cell, and a re-establishment failure reason, wherein
the identifier of the re-establishment cell is an identifier of the re-establishment cell that is selected before a re-establishment timing times out, when a radio resource control RRC connection re-establishment process is initiated, after the security information of the user equipment is already activated, and when a radio link failure occurs in the user equipment in a current cell;
the re-establishment failure reason is a reason why the re-establishment fails after the re-establishment cell is selected before the re-establishment timing times out, when a radio resource control RRC connection re-establishment process is initiated, after the security information of the user equipment is already activated, and when a radio link failure occurs in the user equipment in a current cell; and
the re-establishment failure reason comprises that a preamble is not acknowledged or an RRC connection re-establishment response message is not received; and
the determining, by the network device according to the radio link failure report, a reason why a radio link failure occurs in the user equipment comprises:
if the re-establishment failure reason is that the preamble is not acknowledged, determining, according to the identifier of the re-establishment cell and the re-establishment failure reason that are comprised in the radio link failure report, that the reason why a radio link failure occurs in the user equipment is that an uplink coverage problem exists at a location at which a radio link failure occurs in the user equipment; or
if the re-establishment failure reason is that the RRC connection re-establishment response message is not received, determining that the reason why a radio link failure occurs in the user equipment is that a downlink coverage problem exists at a location at which a radio link failure occurs in the user equipment.

12. The method according to claim 8, wherein if the radio link failure report comprises the related information of the user equipment recorded when the user equipment re-establishes an RRC connection, wherein
the related information of the user equipment comprises at least one of the following: location information of the user equipment when a radio link failure occurs, location information of the user equipment when RRC connection re-establishment fails, an interval between a time when a radio link failure occurs and a time when RRC connection re-establishment is initiated, a signal level measurement result of a current cell, in which a radio link failure occurs, when RRC connection re-establishment occurs, a signal level measurement result of a re-establishment cell, in which a radio link failure occurs, when RRC connection re-establishment occurs, and a signal level measurement result of a neighboring cell when RRC connection re-establishment occurs,
the determining, by the network device according to the radio link failure report, a reason why a radio link failure occurs in the user equipment is specifically:
if it is determined that an interpolation between the location information of the user equipment when a radio link failure occurs and the location information of the user equipment when RRC connection re-establishment fails is greater than a preset threshold, determining that the reason why a radio link failure occurs in the user equipment is that a location movement occurs when the user equipment re-establishes an RRC connection.

13. The method according to claim 12, after the determining, by the network device according to the radio link failure report, a reason why a radio link failure occurs in the user equipment, comprising:
determining a moving speed of the user equipment according to the location information of the user equipment when a radio link failure occurs, the location information of the user equipment when RRC connection re-establishment fails, and the interval between the time when a radio link failure occurs and the time when RRC connection re-establishment is initiated; and
adjusting, according to the moving speed of the user equipment, a moving parameter that corresponds to a type of the user equipment.

14. The method according to claim 8, if in addition to an identifier of a re-establishment cell, the radio link failure report further comprises the information about the serving cell that corresponds to the secondary network device,
after the receiving, by a network device, a radio link failure report sent by user equipment, comprising:
if it is determined that the identifier of the re-establishment cell is the same as an identifier of a cell comprised in the information about the serving cell that corresponds to the secondary network device, skipping using the re-establishment cell as a target cell for switching and adjustment.

15. User equipment, comprising:
a processor, configured to determine that a radio link failure occurs in a current cell; and
a transmitter, configured to send a radio link failure report to a network side device, wherein the radio link failure report is used by the network device to determine, according to the radio link failure report, a reason why a radio link failure occurs in the user equipment, wherein
the radio link failure report comprises at least one of the following:
information about whether security information of the user equipment is activated;
related information of the user equipment when the user equipment re-establishes a radio resource control RRC connection; and
information about a serving cell that corresponds to a secondary network device used when a radio link failure occurs in the user equipment.

16. The user equipment according to claim 15, wherein if the radio link failure report comprises the information about whether the security information of the user equipment is activated, the processor is further configured to: when it is determined that the security information is inactive, switch to an idle state, and record, in the radio link failure report, information that the security information is inactive.

17. The user equipment according to claim 15, wherein if the radio link failure report comprises the related information of the user equipment when the user equipment re-establishes a radio resource control RRC connection, the processor is further configured to: when it is determined that the security information of the user equipment is already activated, initiate a radio resource control RRC connection re-establishment process; and
if a re-establishment cell is selected before a re-establishment timing times out, send an RRC connection re-establishment request to the network device, and record an identifier of the re-establishment cell in the radio link failure report; or
if a re-establishment cell cannot be selected before a re-establishment timing times out, switch to an idle state, and record, in the radio link failure report, a reason why a re-establishment request is not sent, wherein the reason comprises that the re-establishment cell cannot be selected or the re-establishment timing times out.

18. The user equipment according to claim 15, wherein if the radio link failure report comprises the related information of the user equipment when the user equipment re-establishes a radio resource control RRC connection, the processor is further configured to: when sending an RRC connection re-establishment request to the network device, record an identifier of a re-establishment cell in the radio link failure report; and
if the re-establishment fails, record a re-establishment failure reason in the radio link failure report, wherein the re-establishment failure reason comprises that a preamble is not acknowledged or an RRC connection re-establishment response message is not received.

19. The user equipment according to at least one of claim 17 or 18, wherein
the related information of the user equipment further comprises at least one of the following:
location information of the user equipment when a radio link failure occurs, location information of the user equipment when RRC connection re-establishment fails, an interval between a time when a radio link failure occurs and a time when RRC connection re-establishment is initiated, a signal level measurement result of the current cell, in which a radio link failure occurs, when RRC connection re-establishment occurs, a signal level measurement result of the re-establishment cell, in which a radio link failure occurs, when RRC connection re-establishment occurs, and a signal level measurement result of a neighboring cell when RRC connection re-establishment occurs.

20. The user equipment according to claim 15, wherein if the radio link failure report comprises the information about the serving cell that corresponds to the secondary network device used when a radio link failure occurs in the user equipment, and if at least two network side devices are configured to serve the user equipment together, wherein one network side device is a primary network device, and another network side device is a secondary network device, the processor is further configured to record, in the radio link failure report, the information about the serving cell that corresponds to the configured secondary network device, wherein the information about the serving cell that corresponds to the secondary network device comprises an identifier of the serving cell that corresponds to the secondary network device and/or a signal level measurement result of the serving cell that corresponds to the secondary network device.

21. The user equipment according to any one of claims 15 to 20, wherein the processor is further configured to: before sending the radio link failure report to the network device, determine that the security information is already activated.

22. A network device, comprising:
a receiver, configured to receive a radio link failure report sent by user equipment; and
a processor, configured to determine, according to the radio link failure report, a reason why a radio link failure occurs in the user equipment, wherein
the radio link failure report comprises at least one of the following:
information about whether security information of the user equipment is activated;
related information of the user equipment when the user equipment re-establishes a radio resource control RRC connection; and
information about a serving cell that corresponds to a secondary network device used when a radio link failure occurs in the user equipment.

23. The network device according to claim 22, wherein the radio link failure report comprises information that the security information of the user equipment is inactive, and the information that the security information is inactive is information that is recorded when a radio link failure occurs in the user equipment and the security information is inactive; and
the processor is further configured to discard the radio link failure report according to the information that the security information is inactive and that is comprised in the radio link failure report.

24. The network device according to claim 22, wherein the radio link failure report comprises information that the security information of the user equipment is already activated and a reason why a re-establishment request is not sent; and
the reason is a reason why a re-establishment request is not sent and that is recorded when a re-establishment cell cannot be selected before a re-establishment timing times out, when RRC connection re-establishment is initiated, after the security information of the user equipment is already activated, and when a radio link failure occurs in the user equipment in a current cell, wherein
the reason comprises that the re-establishment cell cannot be selected or the re-establishment timing times out; and
the processor is further configured to determine, according to the reason why the re-establishment request is not sent and that is comprised in the radio link failure report, that the reason why a radio link failure occurs in the user equipment is that a coverage hole exists at a location at which a radio link failure occurs in the user equipment.

25. The network device according to claim 22, wherein if the radio link failure report comprises information that the security information is already activated, an identifier of a re-establishment cell, and a re-establishment failure reason, wherein
the identifier of the re-establishment cell is an identifier of the re-establishment cell that is selected before a re-establishment timing times out, when a radio resource control RRC connection re-establishment process is initiated, after the security information of the user equipment is already activated, and when a radio link failure occurs in the user equipment in a current cell;
the re-establishment failure reason is a reason why the re-establishment fails after the re-establishment cell is selected before the re-establishment timing times out, when a radio resource control RRC connection re-establishment process is initiated, after the security information of the user equipment is already activated, and when a radio link failure occurs in the user equipment in a current cell; and
the re-establishment failure reason comprises that a preamble is not acknowledged or an RRC connection re-establishment response message is not received; and
the processor is further configured to: if the re-establishment failure reason is that the preamble is not acknowledged, determine, according to the identifier of the re-establishment cell and the re-establishment failure reason that are comprised in the radio link failure report, that the reason why a radio link failure occurs in the user equipment is that an uplink coverage problem exists at a location at which a radio link failure occurs in the user equipment; or
if the re-establishment failure reason is that the RRC connection re-establishment response message is not received, determine that the reason why a radio link failure occurs in the user equipment is that a downlink coverage problem exists at a location at which a radio link failure occurs in the user equipment.

26. The network device according to claim 22, wherein if the radio link failure report comprises the related information of the user equipment recorded when the user equipment re-establishes an RRC connection, wherein
the related information of the user equipment comprises at least one of the following: location information of the user equipment when a radio link failure occurs, location information of the user equipment when RRC connection re-establishment fails, an interval between a time when a radio link failure occurs and a time when RRC connection re-establishment is initiated, a signal level measurement result of the current cell, in which a radio link failure occurs, when RRC connection re-establishment occurs, a signal level measurement result of the re-establishment cell, in which a radio link failure occurs, when RRC connection re-establishment occurs, and a signal level measurement result of a neighboring cell when RRC connection re-establishment occurs,
the processor is further configured to: if it is determined that an interpolation between the location information of the user equipment when a radio link failure occurs and the location information of the user equipment when RRC connection re-establishment fails is greater than a preset threshold, determine that the reason why a radio link failure occurs in the user equipment is that a location movement occurs when the user equipment re-establishes an RRC connection.

27. The network device according to claim 26, wherein the processor is further configured to determine a moving speed of the user equipment according to the location information of the user equipment when a radio link failure occurs, the location information of the user equipment when RRC connection re-establishment fails, and the interval between the time when a radio link failure occurs and the time when RRC connection re-establishment is initiated; and
adjust, according to the moving speed of the user equipment, a moving parameter that corresponds to a type of the user equipment.

28. The network device according to claim 22, wherein if in addition to an identifier of a re-establishment cell, the radio link failure report further comprises the information about the serving cell that corresponds to the secondary network device,
the processor is further configured to: if it is determined that the identifier of the re-establishment cell is the same as an identifier of a cell comprised in the information about the serving cell that corresponds to the secondary network device, skip using the re-establishment cell as a target cell for switching and adjustment.

29. A system for processing a radio link failure report, comprising:
the user equipment according to any one of claims 15 to 21 and the network device according to any one of claims 22 to 28.
